# EUROPEAN PATENT APPLICATION

(11) **EP 0 899 919 A2**
(43) Date of publication of application: **03.03.1999**
(21) Application number: 98306847.9
(22) Date of filing: 26.08.1998
(51) Int. Cl.: H04L 12/58

(54) **Method and apparatus for directing E-Mail**

(30) Priority: 01.09.1997 ZA 9707831
(71) Applicant: Ixchange (Proprietary) Limited, Sandton, Gauteng (ZA)
(72) Inventor: Ladeira, Fernando Salomao, Midrand, Gauteng (ZA); Hanan, Raphael Isaac, Gallo Manor, Gauteng (ZA); Kreunen, Derek Carl, Sandton, Gauteng (ZA); Buys, Daniel Jacobus, Simondium, Western Cape (ZA); Meyer, Wayne Glen, Northwold, Randburg (ZA)
(74) Representative: Flint, Adam

(57) **Abstract**

A central mail server (32) and a plurality of loosely connected sites (38.1,38.2) are connected to the Internet (100). The central mail server (32) is associated with a unique Transmission Control Protocol/Internet Protocol (TCP/IP) address. Each loosely connected site (38.1,38.2) is associated with a unique domain name, all said domain names being mapped to the TCP/IP address. Mail addressed to the loosely connected sites utilising said domain names is forwarded on the basis of the TCP/IP address to the central mail server (32) where the mail is stored. Upon connection of one of said loosely connected sites (38.1,38.2) to the Internet (100) via a temporary line (36.4) associated with a temporary TCP/IP address, that TCP/IP address is established. E-mail stored and addressed with the domain name of that loosely connected site is forwarded from said central mail server (32) to that loosely connected site via said temporary line.

## Description

The present invention relates to apparatus and a method of interfacing to the Internet and more particularly to apparatus and a method of handling electronic mail (E-mail) sent and received via the Internet.

At present there are two main systems known and available for connecting a user to the Internet. In the first system, a so-called fully connected site is permanently connected via a leased line to an Internet Service Provider (ISP), who provides access to the Internet. With this system, the user owns a domain name, for example abc.com, which is associated with a Transmission Control Protocol/Internet Protocol (TCP/IP) address, for example 1 96.33.240.20. Mail intended for the user is sent to the user by other users of the Internet using that domain name. The mail is then delivered by the ISP to the user via the leased line utilizing the user's TCP/IP address. The disadvantages of this system are that the line and service provided by the ISP are expensive and that special arrangements with a particular ISP are required. In the second system, a so-called intermittently or loosely connected site gains access to the Internet via a dial-up modem, an available one of a plurality of lines connected to the ISP for that purpose, and a Post Office Protocol (POP). In this case, the user does not own a domain name, but utilizes the domain name of the ISP preceded by an appropriate alias, for example user#2@isp.com wherein user#2 is the alias and isp.com is the domain name of the ISP. Since the user does not have a domain name and thus a permanent address, but a temporary or dynamic TCP/IP address, it is not possible for the ISP to deliver mail intended for the user to the user. The mail is stored in an electronic mail box at the ISP. To retrieve the mail, the user has to dial into or poll the ISP to collect the mail stored at the ISP.

It is an object of the present invention to provide apparatus and a method which overcome or alleviate one or more of the aforementioned disadvantages.

According to a first aspect of the present invention there is provided a method of directing electronic mail (E-mail) receivable via the Internet and which is intended for one of a plurality of loosely connected sites, the method comprising the steps of: providing a mail server that is connectable with the Internet; causing a Transmission Control Protocol/Internet Protocol (TCP/IP) address to be associated with the mail server; allocating to each of a plurality of loosely connected sites a unique domain name; causing all of said domain names to be associated with a common TCP/IP address; causing the mail server to be connected with the Internet; receiving and storing E-mail intended for said sites on the mail server; upon connection of one of said loosely connected sites to the Internet via a temporary line associated with a temporary TCP/IP address, establishing that temporary TCP/IP address; and, causing the mail with the domain name associated with that site to be forwarded to that site via the line associated with the temporary TCP/IP address.

In a preferred form of the invention, the loosely connected sites may be caused to connect intermittently to the Internet.

The mail server may be caused to identify and verify the identity of a connected site before mail with the domain name associated with that site is forwarded to that site.

In a further preferred form of the invention, the method further comprises the step of storing mail delivered to a site on a mail server at that site and making mail intended for a station connected at said site in a network configuration available for access by said station on the basis of an alias associated with the domain name for said site.

According to a second aspect of the present invention, there is provided apparatus for directing electronic mail (E-mail) received via the Internet, the apparatus comprising: a central mail server connectable to the Internet; and, a plurality of loosely connected sites connectable to the Internet, the central mail server being associated with a unique Transmission Control Protocol/Internet Protocol (TCP/IP) address; and, each loosely connected site being associated with a unique domain name, all said domain names being mapped to the TCP/IP address; the arrangement being such that, in use, mail addressed to the loosely connected sites utilising said domain names is forwarded on the basis of the TCP/IP address to the central mail server where the mail is stored; the apparatus further comprising connection facilitating means for establishing, upon connection of one of said loosely connected sites to the Internet via a temporary line associated with a temporary TCP/IP address, that TCP/IP address; and, control means for forwarding from said central mail server to that loosely connected site via said temporary line, E-mail stored and addressed with the domain name of that loosely connected site.

Preferably the system further comprises a distributed mail server locatable at each loosely connected site for storing E-mail forwarded to that site.

The control means may be adapted to verify the identity of a connected site, before mail addressed with the domain name of that site is forwarded to that site.

The connection facility means may comprise a first application specific computer program running on a suitable processor forming part of or associated with said central mail server and a second application specific computer program running on a suitable processor forming part of or associated with the distributed mail server at said loosely connected site.

The invention will now further be described, by way of example only, with reference to the accompanying drawings, in which:
Figure 1 is a block diagram illustrating two prior art systems of connecting a user to the Internet; and,
Figure 2 is a block diagram illustrating the system and method according to the invention.

A non-limiting, preferred embodiment of the invention will be described below with reference to the drawings.

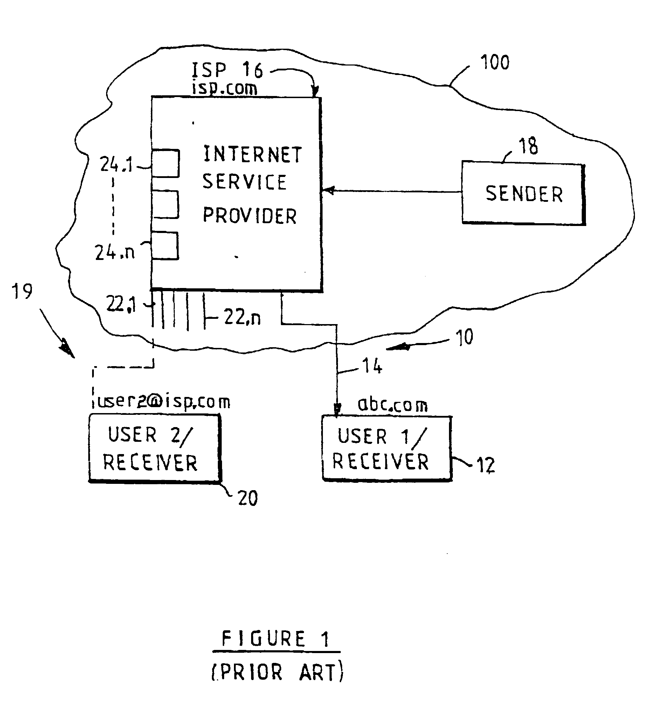

In Figure 1, there are illustrated first and second known methods and systems for providing access to the Internet 100. In the first system 10, a fully connected site 12 is permanently connected via a leased line 14 to an Internet Service Provider (ISP) 16. The ISP 16 provides access to the Internet. The site 12 owns a unique domain name, abc.com, which in turn is associated with a unique Transmission Control Protocol/Internet Protocol (TCP/IP) address, for example 1 96.33.240.20. Mail sent by sender 18 and intended for site 12 is addressed to that site by utilizing the domain name. Mail so addressed is received by the ISP 16 and forwarded by the ISP to the site 12 via line 14. The disadvantages of this system have been referred to in the introductory statements above.

In the second system 19, a so-called loosely connected site 20 gains access to the Internet 100 via a dial up modem (not shown), an available one 22.1 of a plurality of lines 22.1 to 22.n connected to the ISP 16 for that purpose and a Post Office Protocol (POP). In this case, the site 20 does not have an own domain name, but instead utilizes the domain name of the ISP (e.g. isp.com) preceded by an appropriate alias, for example user#2. Since the user does not have a domain name and thus not a permanent address, but merely a temporary or dynamic TCP/IP address associated with the line 20.1 available at the time, it is not possible for the ISP to forward mail intended for the site 20 to that site. Instead, the mail is stored in one of a plurality of readily accessible mail boxes 24.1 to 24.n at the ISP. To retrieve the mail, the user has to dial into the ISP to collect the mail stored in the mail box.

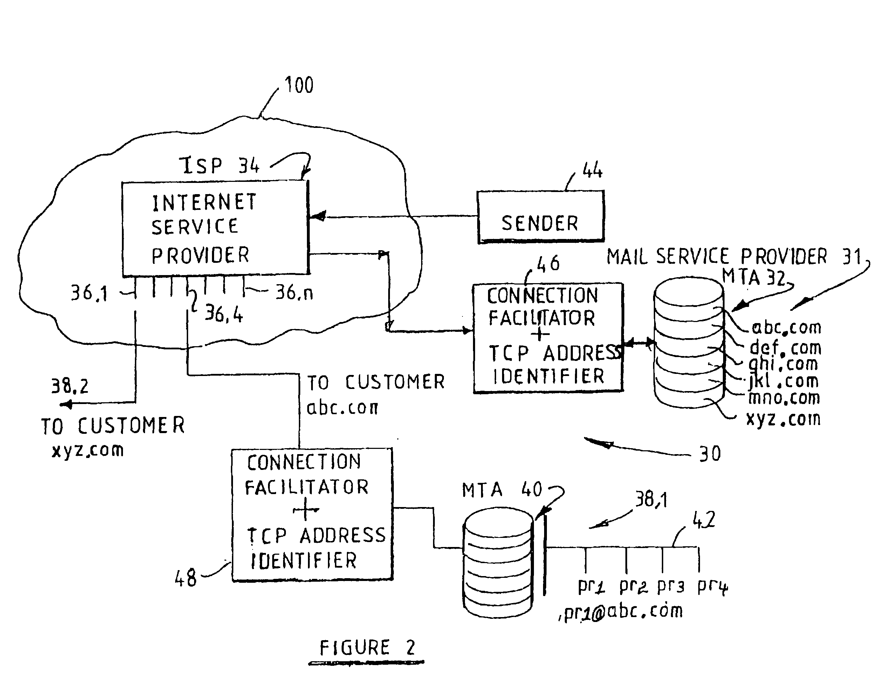

In Figure 2 there is shown a block diagram of an example of apparatus 30 according to the invention. The apparatus 30 comprises a mail server 32 or Message Transfer Agent (MTA) located at the site 31 of a mail service provider. The server 32 is permanently connected to the Internet 100 via an ISP 34.

A plurality of lines 36.1 to 36.n are connected to the ISP and are made available on a temporary basis to a plurality of loosely connected sites, only sites 38.1 and 38.2 of which are shown. The sites are customers of mail service provider 31. The sites may be substantially similar in configuration and architecture and therefore only site 38,1 will be described in detail below, by way of a non-limiting example.

Site 38.1 comprises a MTA 40 connected to a local area network 42 to which are connected processors prl, pr.2, pr3 and pr4.

Each site is allocated a unique domain name such as abc.com in the case of site 38.1 and xyz.com in the case of site 38.2. The sites use and advertise their respective domain names to the outside world as their own domains. However, the domain names of the sites all map to a single TCP/IP address for the mail server 32 at the mail service provider site 31.

Mail originating from sender 44 and intended for site 38.1 is sent via the Internet using the domain name abc.com and hence the TCP/IP address for server 32. Similarly mail intended for site 38.2 is sent via the Internet using the domain name xyz.com and consequently the same TCP/IP address. The mail is received by the server 32 and stored in accordance with the domain names used.

At the mail service provider 31 there are provided connection facilitating means and TCP/IP address identifier means 46. In an example, these are in the form of application specific software 46, which, in conjunction with application specific software 48 at site 38.1, facilitates connection between MTA 32 and a site and determines the temporary TCP/IP address of the site at the time, as will hereinafter be described.

When site 38.1 dials into the Internet 100, line 36.4 may be free at the time and made available to site 38.1. That connection is associated with its own unique TCP/IP address.

The connection facilitating and TCP/IP address identifier means 46 and 48 cooperate to establish a connection between MTA 32 and MTA 40 and furthermore to identify the TCP/IP address used by the loosely connected site 38.1 at that time. The server 32 thereupon identifies the site 38.1 and transmits the mail intended for abc.com via the Internet and the temporary line 36.4, to site 38.1, which is associated with that domain name. The mail is stored at MTA 40 and made available by MTA 40 to users of the network 42, to be viewed or downloaded off MTA 40 by any one of processors prl to pr4. Controllers at the sites 38.1 to 38.n may be arranged such that they cause their respective sites periodically or intermittently to be connected to the Internet via available ones of lines 36.1 to 36.n, as described above. When so connected, the mail service provider 31 identifies and verifies the identity of the connected site. Only after this verification is positive does the server 32 cause the mail intended for that site to be delivered to that site, as described above.

The advantages of the apparatus and the method according to the invention are that use of the temporary lines used therein is much cheaper than the permanent lines of the first prior art system. Furthermore, the customer sites 38.1 to 38.n need not make any arrangements for mail services with any ISP. The mail service is independent of the ISP through which the loosely connected site connects to the Internet. However, the loosely connected sites enjoy the same advantages in the form of an own domain name and mail that is delivered to the site, which are enjoyed by permanently connected sites only, in the prior art systems.

An embodiment of the present invention has been described with particular reference to the example illustrated. However, it will be appreciated that variations and modifications may be made to the example described within the scope of the present invention.

## Claims

1. A method of directing electronic mail (E-mail) receivable via the Internet and which is intended for one of a plurality of loosely connected sites, the method comprising the steps of:
providing a mail server (32) that is connectable with the Internet (100);
causing a Transmission Control Protocol/Internet Protocol (TCP/IP) address to be associated with the mail server (32);
allocating to each of a plurality of loosely connected sites (38.1,38.2) a unique domain name;
causing all of said domain names to be associated with a common TCP/IP address;
causing the mail server (32) to be connected with the Internet;
receiving and storing E-mail intended for said sites (38.1,38.2) on the mail server (32);
upon connection of one of said loosely connected sites (38.1,38.2) to the Internet (100) via a temporary line (36.4) associated with a temporary TCP/IP address, establishing that temporary TCP/IP address; and,
causing the mail with the domain name associated with that site to be forwarded to that site via the line (36.4) associated with the temporary TCP/IP address.

2. A method according to claim 1, including the step of causing the loosely connected sites (38.1,38.2) to be intermittently connected to the Internet (100).

3. A method according to claim 1 or claim 2, including the step of causing the mail server (32) to identify and verify the identity of a connected site before mail with the domain associated with that site is forwarded to that site.

4. A method according to any one of the preceding claims, further comprising the steps of storing mail delivered to a site on a mail server (40) at said site and making mail intended for a station (prl,pr2,pr3,pr4) connected at said site in a network configuration available for access by said station (prl,pr2,pr3,pr4) on the basis of an alias associated with the domain name for said site.

5. Apparatus for directing electronic mail (E-mail) received via the Internet, the apparatus comprising
a central mail server (32) connectable to the Internet (100); and,
a plurality of loosely connected sites (38.1,38.2) connectable to the Internet (100),
the central mail server (32) being associated with a unique Transmission Control Protocol/Internet Protocol (TCP/IP) address; and,
each loosely connected site (38.1,38.2) being associated with a unique domain name, all said domain names being mapped to the TCP/IP address;
the arrangement being such that, in use, mail addressed to the loosely connected sites utilizing said domain names is forwarded on the basis of the TCP/IP address to the central mail server (32) where the mail is stored;
the apparatus further comprising connection facilitating means (46,48) for establishing, upon connection of one of said loosely connected sites (38.1,38.2) to the Internet (100) via a temporary line (36.4) associated with a temporary TCP/IP address, that TCP/IP address; and,
control means (46) for forwarding from said central mail server (32) to that loosely connected site via said temporary line, E-mail stored and addressed with the domain name of that loosely connected site.

6. Apparatus according to claim 5, further comprising a distributed mail server (40) located at each loosely connected site for storing the mail forwarded to that site.

7. Apparatus according to claim 5 or claim 6, wherein the control means (46) is arranged to verify the identity of a connected site before mail addressed with the domain name of that site is forwarded to that site.

8. Apparatus according to any of claims 5 to 7, wherein the connection facilitating means (46,48) comprises a processor (46) forming part of or associated with said central mail server (32) and running a first application-specific computer program and a processor (48) forming part of or associated with the distributed mail server (40) at said loosely connected site and running a second application-specific computer program.
